# EUROPÄISCHE PATENTANMELDUNG

(11) **EP 1 080 770 A2**
(43) Veröffentlichungstag der Anmeldung: **07.03.2001**
(21) Anmeldenummer: 00109207.1
(22) Anmeldetag: 28.04.2000
(51) Int. Cl.: B01D 46/52, B01D 39/16, B01D 29/07, F02M 35/024, B60H 3/06

(54) **Filtereinsatz aus einem zickzackförmig gefalteten Faltenpack und Verfahren zu seiner Herstellung**

(30) Priorität: 28.08.1999 DE 19941029
(71) Anmelder: Firma Carl Freudenberg, 69469 Weinheim (DE)
(72) Erfinder: Hintenlang, Dieter, 69518 Abtsteinach (DE); Borris, Richard, 68542 Heddesheim (DE)

(57) **Zusammenfassung**

Filtereinsatz aus einem zickzackförmig gefalteten Faltenpack aus einem thermoplastisch verform- und verschweißbaren Material, dessen Falten in einem eingestellten definierten Abstand zueinander gehalten sind, insbesondere aus Vliesstoff, wobei in Längsrichtung (4) des Faltenpacks (2) quer zu den Falten (3) in wenigstens einem Streifen (5, 6, 7, 15, 17) auf einer oder beiden Seiten (8, 9) des Faltenpacks (2) die einzelnen Faltenspitzen (10) gleichgerichtet umgelegt und jeweils mit der nächstfolgenden, ebenfalls umgelegten Falte (3) mindestens im überlappenden Bereich (20) durch Verschweißen fest verbunden sind.

## Beschreibung

Die vorliegende Erfindung befaßt sich mit der Verbesserung von Filtereinsätzen aus einem zickzackförmig gefalteten Faltenpack aus einem thermoplastisch verform- und verschweißbarem Material, dessen Falten in einem eingestellten definierten Abstand zueinander gehalten sind, insbesondere aus einem Vliesstoff. Filtereinsätze dieser Art werden beispielsweise bei Kraftfahrzeugen als Innenraumluftfilter oder auch als Motorzuluftfilter verwendet. Eine immer wieder auftretende Problematik bei diesen Filtern ist der regelmäßige Faltenabstand und damit eine gleichbleibende gleich gute Filterwirkung über die gesamte Filterfläche. Während der Montage des Filters oder auch im Gebrauch können in einzelnen Bereichen die Faltenabstände unbeabsichtigt verändert werden und es entsteht eine verringerte Filterwirkung.

Aus der DE OS 42 27 744 ist zur Stabilisierung der Falten die Verwendung von vorgefertigten Streifen als Fixiermittel bekannt, die mit den Faltenkanten des Filtermaterials durch ein Anschmelzens des Streifens oder Filterbahnmaterials verbunden sind. Um einen solchen Filterpack zu erstellen, wird das zickzackförmig gefaltete Filterbahnmaterial in eine kammartige Aufnahmevorrichtung eingelegt, die zur Stabilisierung des Faltenverbundes aufzubringende Streifen auf die Faltenkante aufgelegt und die Streifen auf die Faltenkanten aufgeschweißt. Nachteilig ist hierbei die Einbringung der zusätzlichen Streifen und ihr Verschweißen mit dem Filterbahnmaterial.

Eine andere Möglichkeit die Faltenabstände in einer vorgegebenen Lage zu erhalten, ist aus der DE PS 40 02 078 zu entnehmen. Ein als Faltenpack ausgebildeter Filtereinsatz aus thermoplastisch verschweißbarem Faservliesstoff wird mit einem definierten Faltenabstand hergestellt. Dann werden die beiden Außenkanten des Faltenpacks formschlüssig zwischen entsprechende kammartige Profile eingeklemmt, und ein über die Stirnkanten der Falten seitlich hinausstehendes Material zunächst umgelegt und dann thermisch miteinander verschweißt. Das Verfahren ist relativ einfach in der Handhabung und führt zu guten Ergebnissen. Durch die auf ihrer ganzen Höhe an den Stirnkanten verschweißten Falten erhält der Faltenpack jedoch eine Steifheit die seinen Einsatzbereich einschränken kann.

Eine andere Lösung wird bei einem Filter nach der DE OS 43 27 368 verfolgt, bei dem einseitig in das Filterelement Stützelemente eingefügt werden, um den Faltenabstand zu fixieren. Die Stützelemente sind aus flexiblen Kunststoff und lassen ein Verbiegen des Filterelements um seine Längsachse zu. Die Herstellung des Stützelements und seine Einfügung in ein Filterelement ist jedoch relativ aufwendig, so daß das Filterelement schon aus Kostengründen nur bedingt zum Einsatz kommen kann.

Der Erfindung liegt die Aufgabe zugrunde, einen Filtereinsatz zu schaffen, der einfach und kostengünstig herstellbar ist und dessen Flexibilität oder Steifheit vorgegeben werden kann. Dabei sollen in jedem Fall die Abstände der einzelnen Falten des Faltenpacks einstellbar und definiert sein. Das zu seiner Herstellung benötigte Verfahren soll leicht handhabbar und maschinenseitig ohne großen Aufwand sein.

Die Lösung der gestellten Aufgabe wird mit den Merkmalen der Ansprüche 1 und 6 erreicht. Zur Herstellung des Filtereinsatzes werden bei einem zickzackförmig gefalteten Faltenpack in Längsrichtung des Faltenpacks quer zu den Falten die Faltenspitzen streifenförmig miteinander verbunden. In dem Streifen sind die einzelnen Faltenspitzen gleichgerichtet umgelegt und jeweils mit der nächstfolgenden ebenfalls umgelegten Falte mindestens im überlappenden Bereich fest verbunden. Bei einem solchen Filtereinsatz sind die Abstände der Falten zueinander definiert, da alle Faltenspitzen auf gleicher Höhe umgelegt sind. Je nach Größe des Filters und auch in Abhängigkeit von anderen Dimensionen des Filtermaterials wird die Filteroberfläche mit nur einem Streifen auf nur einer Seite oder auch mit mehreren Streifen auf nur einer oder beiden Seiten des Faltenpacks versehen. Bei einer Ausstattung des Faltenpacks mit Verbindungsstreifen auf nur einer Seite des Faltenpacks behält der Faltenpack eine hohe Flexibilität. Durch Streifen auf beiden Seiten des Faltenpacks wird eine höhere Steifheit des Faltenpacks erreicht.

Prinzipiell ist es möglich, die umgelegten Faltenspitzen im überlappenden Bereich mit der nächsten Falte durch ein Klebevorgang zu befestigen. Hierfür werden jedoch entsprechende Auftragsmittel für die Klebemasse erforderlich. Günstiger ist deshalb die Herstellung des Filtereinsatzes aus einem Vliesstoff, der aus thermoplastisch verformbarem und verschweißbarem Material besteht. Die Verbindung der einzelnen Faltenspitzen im überlappenden Bereich mit der nächstfolgenden Falte kann sodann durch Verschweißen hergestellt werden.

Insbesondere bei kleineren Filtern genügt die Anbringung eines Streifens auf nur einer Seite des Faltenpacks, beispielsweise in dessen Mittelbereich. In einigen Anwendungsbereichen des Filtereinsatzes ist dieses bereits ausreichend. Eine höhere Sicherheit wird jedoch erreicht, wenn beispielsweise an jeder Stirnseite des Faltenpacks Streifen angebracht werden, die gegebenenfalls noch zusätzlich durch Streifen in der Mitte des Faltenpacks ergänzt werden. Die Anbringung in der Mitte des Faltenpacks kann auch auf der gegenüberliegende Seite des Faltenpacks vorgenommen werden, so daß die Streifen auf sich gegenüberliegenden Seiten angebracht sind. Dadurch erhält der Filtereinsatz eine höhere Steifheit.

Eine für viele Anwendungszwecke günstige Form entsteht dann, wenn die Streifen an beiden Seiten des Faltenpacksacks vorzugsweise an dessen Stirnkanten einander deckend vorhanden sind. Es wird dann ein Filtereinsatz gebildet, dessen Längskanten als Führungsschiene, Dichtrahmen oder Klemmrand für seine Anbringung an einem Gehäuse dienen kann.

Zur Herstellung des Filtereinsatzes wird der Faltenpack auf eine kammförmige Halterung aufgesetzt. Die Zähne der Halterung sind um die umlegbare Länge der Faltenspitzen verkürzt und greifen in die einzelnen Falten ein. Die Breite jeder Zahnreihe ist auf die Breite des betreffenden Streifens ausgerichtet. Ein Schweißwerkzeug mit einer oder mehreren Schienen, ebenfalls in der Breite der einzelnen Streifen wird für das Umlegen und Verschweißen der Faltenspitzen verwendet. Dabei werden die Faltenspitzen gleichgerichtet umgelegt und dann miteinander verschweißt.

In der Zeichnung sind mehrere Ausführungsbeispiele der vorliegenden Erfindung dargestellt.

Es zeigt:
- Fig. 1: einen Abschnitt des Filtereinsatzes in der Draufsicht
- Fig. 2: einen Schnitt durch den Filtereinsatz der Figur 1 gemäß Linie A-A,
- Fig. 3: einen Schnitt durch einen Filtereinsatz mit sich gegenüberliegenden Streifen,
- Fig. 4: einen Filtereinsatz mit Verbindungsstreifen an seinen beiden Seiten im Schnitt,
- Fig. 5: die Herstellung des Verbindungsstreifens durch Umlegen der Faltenspitzen,
- Fig. 6: das Verschweißen der überlappenden Bereiche von Faltenspitze und nächstfolgender Falte und
- Fig. 7: den Verschweißvorgang mit Gegenleiste.

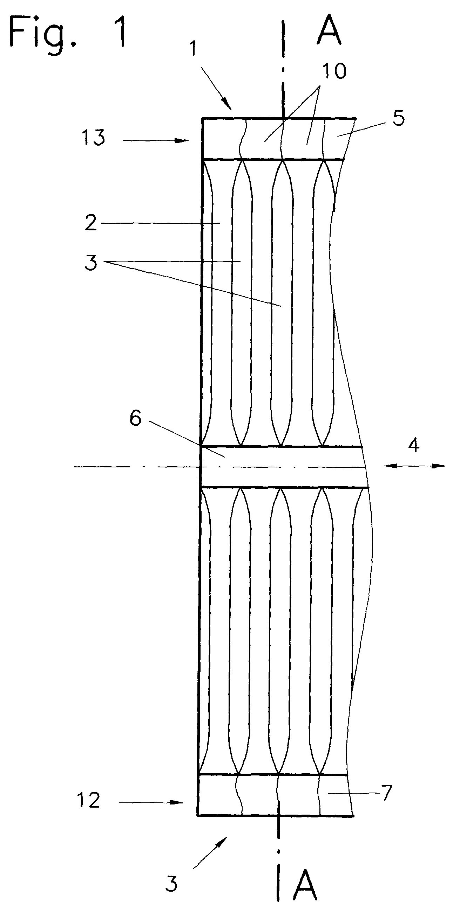

In der Figur 1 ist in der Draufsicht ein Filtereinsatz 1 gezeigt, der aus einem zickzackförmig gefalteten Faltenpack 2 aus Vliesstoff besteht. Die einzelnen Falten 3 stehen in gleichmäßigen Abständen zueinander. Der Faltenpack 2 ist in seiner Längsrichtung 4 mit den Streifen 5, 6 und 7 versehen, An den Stirnkanten 12, 13 der Falten 3 sind die Streifen 5 und 7 angebracht. Außerdem ist in der Mitte des Faltenpacks 2 der Streifen 6 vorgesehen. Der Faltenpack 2 ist endlicher Länge, in der Figur ist nur ein Seitenende gezeigt.

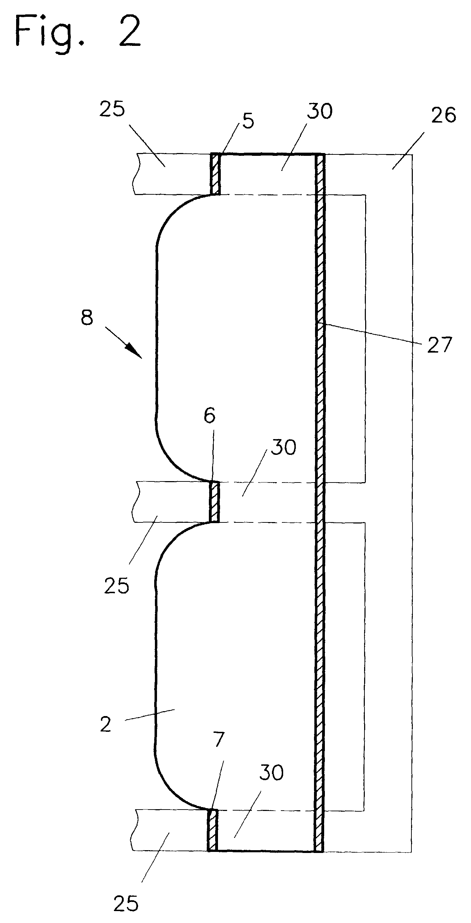

Die Figur 2 zeigt einen Schnitt durch den Faltenbalg der Figur 1 gemäß der Linie A-A. Im Schnitt ist erkennbar, daß die Streifen 5 bis 7 nur auf der Oberseite 8 des Faltenpacks 2 angebracht sind. Die Streifen 5 bis 7 werden durch Umlegen der einzelnen Faltenspitzen 10 und Verbinden der umgelegten Faltenspitzen 10 im überlappenden Bereich 20 erreicht, wobei auch die beiden Schenkel 11 der Faltenspitzen 10 miteinander verbunden werden können. Auf diese Weise entstehen die Streifen 5 bis 7. Das Umlegen der Faltenspitzen 10 und ihre Verbindung miteinander kann durch eine Sonotrode 25 im Ultraschallschweißverfahren erfolgen. In diesem Fall ist die Sonotrode 25 mit dem Amboß 26 ausgestattet, der mit drei kammförmig ausgebildeten Zahnreihen 30 von unten in den Faltenpack 2 eingreift.

In der einfachsten Ausführungsform bei kleineren Filtern genügt es, wenn der Faltenpack 2 lediglich auf einer seiner Seiten 8 in seiner Mitte mit dem Streifen 6 versehen wird. Eine verbesserte Zuordnung der einzelnen Falten 3 zueinander wird aber erreicht, wenn an jeder Stirnkante 12, 13 des Faltenpacks 2 Streifen 5 und 7 angebracht werden. Bei besonders breiten Faltenpacks 2 können Streifen 5 bis 7 an den Stirnkanten 12 und 13 und auch in der Mitte des Faltenpacks 2 angebracht werden.

Bei einer Ausführungsform, wie sie in den Figuren 1 und 2 gezeigt ist, behält der Faltenpack 2 eine hohe Flexibilität und kann beispielsweise leicht in eine zylindrische Form gebracht werden. Dabei kann die Seite 8 mit den Streifen 5 bis 7 sowohl außerhalb als auch bevorzugt innerhalb des Zylinders zu liegen kommen.

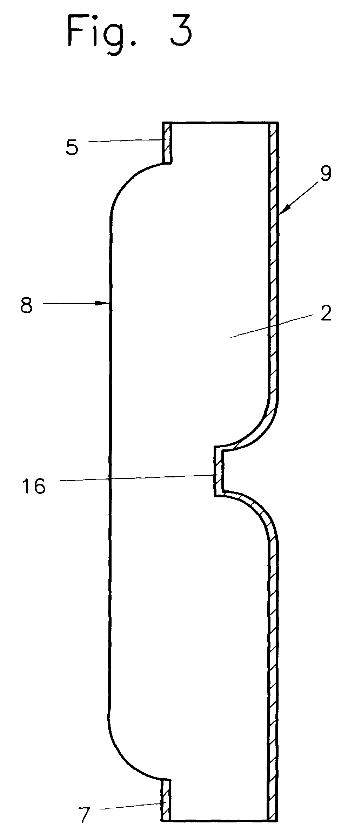

Die Figur 3 zeigt ebenfalls einen Schnitt durch einen Faltenpack 2 ähnlich der Figur 2 mit der Abweichung jedoch, daß der mittlere Streifen 16 auf der Seite 9 gegenüberliegend der Seite 8 angebracht ist. Hierdurch erhält der Faltenpack 2 eine höhere Steifheit.

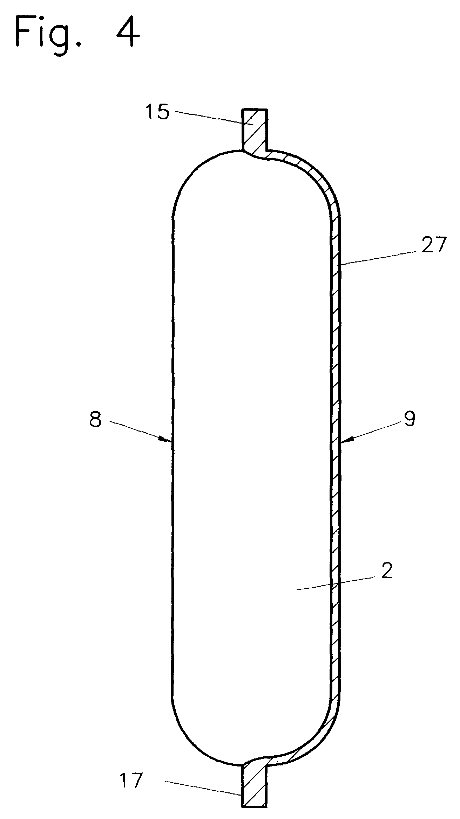

Die Figur 4 zeigt einen Schnitt durch einen Faltenpack 2 bei dem die Streifen 15 und 17 durch Umlegen von sich deckenden Faltenspitzen 10 auf beiden Seiten 8 und 9 des Faltenpacks 2 gebildet wurden. Die Streifen 15 und 17 ergeben hierbei zwei seitliche Leisten, die beim Einfügen des Faltenpacks 2 in einen Rahmen oder eine andere Vorrichtung als Führungs- oder Abdichtleisten dienen können.

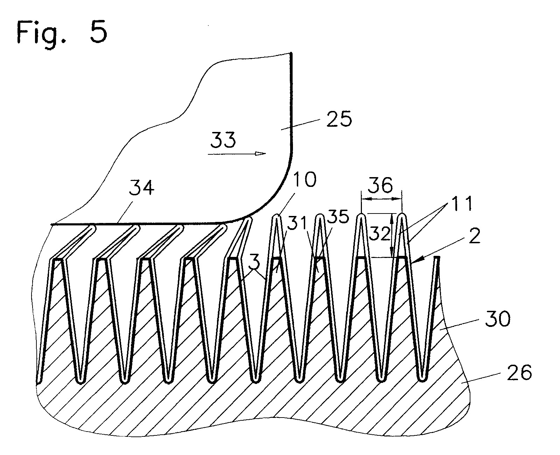

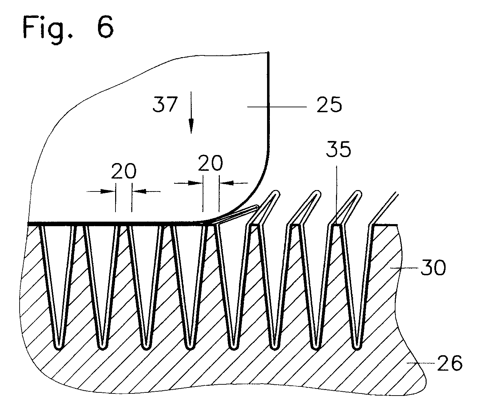

In den Figuren 5 und 6 ist das Herstellungsverfahren für den Filtereinsatz 1 schematisch dargestellt. Zunächst wird, wie in Figur 5 gezeigt, der Faltenpack 2 in eine nicht näher gezeigte Vorrichtung mit einer kammförmigen Halterung 26 eingelegt. Für jeden Streifen 5 bis 7 bzw. 16 ist eine Zahnreihe 30 vorgesehen. Die Zähne der Halterung 26 greifen von unten in die Freiräume der einzelnen Falten 3. Die Sonotrode 25 wird quer zu den einzelnen Falten 3 in Richtung des Pfeils 33 bewegt. Der Abstand der unteren Kante 34 der Sonotrode 25 ist so gewählt, daß durch die Sonotrode 25 die Spitzen 10 der Falten 3 umgelegt werden. Die einzelnen Zähne des Kamms sind verkürzt, so daß sie nicht bis in die Faltenspitzen 10 selbst hineinragen. Die Zahnoberkante 35 dient folglich als Gegenlager beim Umlegen der Faltenspitzen 10. Die umlegbare Länge 32 der Faltenspitzen 10 wird so gewählt, daß die Faltenspitzen 10 die Freiräume 36 zwischen den einzelnen Falten 3 überbrücken und jeweils an der nächsten Falte anliegen.

Nachdem die Faltenspitzen 10 durch die Sonotrode 25 teilweise, wie in Figur 5 gezeigt, umgelegt worden sind, wird die Sonotrode 25 wie mit dem Pfeil 37 in Fig. 6 angezeigt, nach unten bewegt und der Schweißvorgang durchgeführt. Dabei entstehen Streifen, wie sie in den Figuren 1 bis 3 gezeigt sind. Die einzelnen Spitzen 10 sind im Bereich als Streifen 5 bis 7 mit der jeweils nächsten nachfolgenden Faltenspitze 10 im überlappenden Bereich 20 fest verbunden. Der überlappende Bereich 20 erstreckt sich über die Zahnkante 35. Durch eine entsprechende Einstellung an der Sonotrode 25 ist ein Verschweißen der Schenkel 11 der Faltenspitzen 10 auch möglich, so daß am Streifen eine Schweißnaht entsteht.

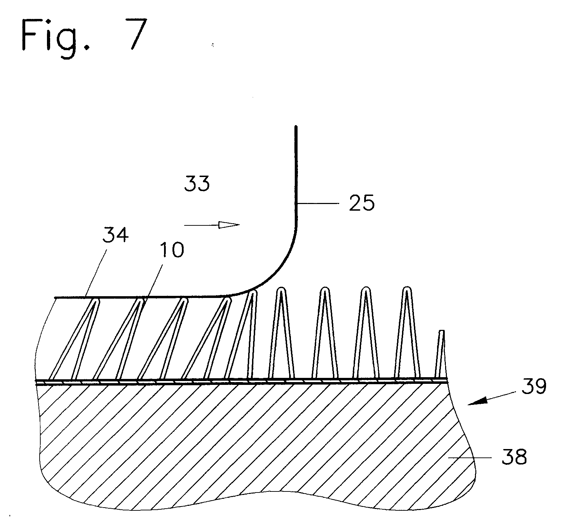

Die Herstellung von Streifen 15 und 17, wie sie in der Fig. 4 gezeigt sind, erfolgt im ersten Schritt wie in den Fig. 5 und 6 geschildert. Zunächst werden die Faltenspitzen 10 auf einer der Seiten 8 und 9 des Faltenpacks 2 umgelegt und miteinander verschweißt. Danach wird der Faltenpack 2 auf eine weitere Halterung 39 aufgesetzt, die anstelle der Zahnreihen 30 mit durchgehenden Leisten 38 versehen ist, wie in Fig. 7 gezeigt. Sodann werden die Faltenspitzen 10 in einem Streifen, der deckend zu dem bereits auf der einen Seite des Faltenpacks 2 gebildeten Streifen ist, umgelegt und miteinander verschweißt. Den Umlegevorgang zeigt die Fig. 7. Zum Schweißen wird die Sonotrode 25 nach unten auf die Leisten 38 gedrückt.

## Patentansprüche

1. Filtereinsatz aus einem zickzackförmig gefalteten Faltenpack aus einem thermoplastisch verform- und verschweißbaren Material, dessen Falten in einem eingestellten definierten Abstand zueinander gehalten sind, insbesondere aus einem Vliesstoff, **dadurch gekennzeichnet,** daß in Längsrichtung (4) des Faltenpacks (2) quer zu den Falten (3) in wenigstens einem Streifen (5, 6, 7, 15, 17) auf einer oder beiden Seiten (8, 9) des Faltenpacks (2) die einzelnen Faltenspitzen (10) gleichgerichtet umgelegt und jeweils mit der nächstfolgenden, ebenfalls umgelegten Falte (3) mindestens im überlappenden Bereich (20) durch Verschweißen fest verbunden sind.

2. Filtereinsatz nach Anspruch 1, dadurch gekennzeichnet, daß ein Streifen (6) in der Mitte auf einer Seite (8) des Faltenpacks (2) angeordnet ist.

3. Filtereinsatz nach Anspruch 1, dadurch gekennzeichnet, daß Streifen (5, 7) an jeder Stirnkante (12, 13) des Faltenpacks (2) angeordnet sind.

4. Filtereinsatz nach Anspruch 1, dadurch gekennzeichnet, daß Streifen (5, 7) an den Stirnkanten (12, 13) und in der Mitte des Faltenpacks (2) angebracht sind.

5. Filtereinsatz nach Anspruch 1, dadurch gekennzeichnet, daß Streifen (15, 17) an beiden Seiten (8, 9) des Faltenpacks (2), vorzugsweise an dessen Stirnkanten (12, 13), einander deckend vorhanden sind.

6. Verfahren zur Herstellung eines Filtereinsatzes aus einem zickzackförmig gefalteten Faltenpack aus thermoplastisch verschweißbarem Vliesstoff, dessen Falten in einem eingestellten definierten Abstand zueinander gehalten sind, nach einem der Ansprüche 1 bis 5, dadurch gekennzeichnet, daß in Längsrichtung (4) des Faltenpacks (2) quer zu den Falten (3) in wenigstens einem Streifen (5, 6, 7, 15, 17) auf einer oder beiden Seiten (8, 9) des Faltenpacks (2) die einzelnen Faltenspitzen (10) gleichgerichtet umgelegt und jeweils mit der nächstfolgenden ebenfalls umgelegten Falte (3) mindestens im überlappenden Bereich (22) fest miteinander durch Verschweißen verbunden werden.

7. Verfahren zur Herstellung eines Filtereinsatzes aus einem zickzackförmig gefalteten Faltenpack aus thermoplastisch verschweißbarem Vliesstoff, dessen Falten in einem eingestellten definierten Abstand zueinander gehalten sind nach Anspruch 6, dadurch gekennzeichnet, daß der Faltenpack (2) auf eine in die einzelnen Falten (3) eingreifende, kammförmige Halterung (26) aufgesetzt wird, deren Zähne (30) um die umlegbare Länge (32) der Faltenspitzen (10) verkürzt sind und daß über ein Schweißwerkzeug (25) die Faltenspitzen (10) umgelegt und verschweißt werden, wobei die Zahnkanten (35) als Gegenlager für den Schweißvorgang dienen.

8. Verfahren zur Herstellung eines Filtereinsatzes aus einem zickzackförmig gefalteten Faltenpack aus thermoplastisch verschweißbarem Vliesstoff, dessen Falten in einem eingestellten definierten Abstand zueinander gehalten sind nach Anspruch 6, dadurch gekennzeichnet, daß der Faltenpack (2) nach Bildung des beziehungsweise der Streifen (5, 6, 7) auf einer seiner Seiten (8 oder 9) umgekehrt auf eine weitere Halterung aufgesetzt wird, die mit Leisten (38) versehen ist, auf welchen die Streifen (5, 6, 7) zur Anlage kommen und die als Gegenlager für den zweiten Schweißvorgang der umgelegten Faltenspitzen (10) dienen.
